# FASCICULE DE BREVET EUROPEEN

(11) **EP 1 875 092 B1**
(45) Date de publication et mention de la délivrance du brevet: **16.10.2019**
(21) Numéro de dépôt: 06755439.4
(22) Date de dépôt: 21.04.2006
(51) Int. Cl.: F16C 33/12, F16C 33/14, F16C 9/02, F16C 17/00

(54) **COUPLE D'ORGANES DE GUIDAGE DONT L'UN EST EN UN ACIER PARTICULIER CONDUISANT À DES PERFORMANCES ANTI-GRIPPAGE AMÉLIORÉES**
FÜHRUNGSELEMENTPAAR, VON DEM EINES AUS EINEM SPEZIELLEN STAHL HERGESTELLT IST, WAS ZU WENIGER FESTFRESSEN FÜHRT
PAIR OF GUIDING ELEMENTS OF WHICH ONE IS MADE OF A SPECIFIC STEEL LEADING TO IMPROVED ANTI-SEIZING PERFORMANCES

(30) Priorité: 22.04.2005 FR 0504062
(43) Date de publication de la demande: 09.01.2008
(73) Titulaire: H.E.F., 42160 Andrézieux-Bouthéon (FR)
(72) Inventeur: CHADUIRON, Eric, F-42140 Viricelles (FR); HOUZE, Laurent, F-42000 Saint-Etienne (FR); JUMAINE, Shamba, F-42100 Saint-Etienne (FR)
(74) Mandataire: Santarelli
(86) Numéro de dépôt international: PCT/FR2006/000886
(87) Numéro de publication internationale: WO 2006/111661

(56) Documents cités:
- EP-A- 0 987 456
- EP-A- 1 471 159
- WO-A-00/18975
- WO-A-02/25068
- WO-A1-02/070909
- DE-A1- 10 012 619
- US-A1- 2003 190 105
- David Pye: "An Introduction to Nitriding" In: "Practical Nitriding and Ferritic Nitrocarburizing", 31 December 2003 (2003-12-31), ASM International, Materials Park, OH, XP055142555, ISBN: 978-0-87-170791-8 pages 1-12, DOI: 10.1361/pnafn2003p001,

## Description

### DOMAINE DE L'INVENTION

L'invention concerne des pièces mécaniques que l'on range dans la catégorie des organes de guidage. Ces organes de guidage (on parle en pratique de couple d'organes de guidage) sont constitués de deux pièces antagonistes, en contact l'une avec l'autre mais mobiles l'une par rapport à l'autre de sorte que les organes de guidage auxquels elles sont fixées peuvent se mouvoir l'une par rapport à l'autre, avec un frottement aussi faible que possible.

Les surfaces par lesquelles ces pièces sont en contact sont l'objet de sollicitations mécaniques et chimiques dues à cette mobilité relative et à leur environnement, de sorte qu'elles se dégradent plus ou moins rapidement par usure de frottement, par corrosion, ou les deux à la fois. Ces organes de guidage peuvent avoir des géométries diverses correspondant à différentes cinématiques ; c'est ainsi qu'ils peuvent constituer des systèmes arbre/palier (on parle aussi parfois de systèmes arbre/coussinet), des rotules, ou encore des glissières, notamment.

De façon plus précise, l'invention se rapporte à des organes de guidage lubrifiés à la graisse et soumis à des conditions sévères, telles qu'une forte pression de contact par exemple, ou encore une atmosphère corrosive, ou les deux à la fois, entraînant des risques élevés de dégradation des surfaces en contact.

De façon privilégiée, mais non limitative, l'invention concerne les organes de guidage faisant partie de systèmes ou articulations arbre/palier, le mot « arbre » devant être pris au sens générique du terme, comme désignant la pièce mâle de l'articulation (tandis que le « palier » est la partie femelle de cette articulation) ; ce peut être par exemple le maneton ou le tourillon d'un vilebrequin ou d'un arbre à cames.

### ETAT DE LA TECHNIQUE

### 1. Conception des organes de guidage

D'une façon générale, les organes de guidage, et notamment les systèmes arbres/paliers conçus pour un usage sous forte charge, sont réalisés à partir d'une pièce mâle en acier et d'une pièce femelle qui est en bronze (pour les systèmes dont la conception est la plus ancienne) ou en acier (pour les systèmes plus récents).

La plupart du temps, on utilise pour de tels organes de guidage des aciers au carbone ou des aciers de construction du type 42 Cr Mo 4 (selon la norme française), certains aciers pouvant être nitrurés de façon à augmenter leur résistance à l'usure par frottement. Dans les versions les plus améliorées les organes de guidage peuvent, comme l'enseigne le document EP 0 987 456, être en outre revêtus d'une couche de revêtement polymère et présenter une géométrie particulière favorisant l'action de la graisse.

Il est évidemment possible et également connu de combiner ces différentes améliorations entre elles.

### 2. Choix des aciers

Lorsqu'il doit concevoir un organe mécanique, l'homme de l'art dispose d'un choix très vaste de matériaux, notamment d'aciers. La composition de ces aciers est régie par des normes nationales, régionales ou internationales, et la nature et la concentration des éléments d'addition sont définies en fonction des propriétés requises pour l'usage envisagé.

C'est ainsi que l'homme de l'art, lorsqu'il est intéressé à des propriétés de surface améliorées, peut être amené à s'intéresser plus particulièrement à des aciers dits « aciers pour cémentation » et à des aciers dits « aciers pour nitruration ». Les aciers pour cémentation contiennent de préférence moins de 0,4 % de carbone ; à l'intérieur de cette fourchette, on réserve plutôt la zone 0,2 -0.4 % à la carbonitruration, tandis que les teneurs inférieures à 0,2 % sont plus particulièrement destinées à la cémentation. Les aciers de nitruration sont, de préférence, soit des aciers de construction non alliés au carbone, soit des aciers faiblement alliés du type aciers au chrome molybdène, les plus performants contenant en outre de l'aluminium. La littérature décrivant ces catégories d'aciers est abondante. On se reportera par exemple à « Pratique des traitements thermochimiques » - Editions Techniques de l'Ingénieur » (cette rubrique est régulièrement mise à jour), ainsi qu'aux fiches techniques des différents fournisseurs d'acier.

L'homme de l'art dispose ainsi de guides lui permettant en principe un choix optimum d'acier en fonction du traitement qu'il a choisi et des propriétés qu'il souhaite obtenir.

A toutes fins utiles, il est rappelé ici que :
* la cémentation est un traitement thermochimique d'un acier par diffusion superficielle de carbone ; cette diffusion superficielle conduit à la formation d'une couche dure en surface dont l'épaisseur peut aller jusqu'à 1 voire 2 mm et dont la dureté est de 700 à 900 HV. Ce traitement s'applique principalement aux aciers à bas carbone ; il permet d'obtenir une dureté superficielle importante (résistance à l'usure) tout en conservant une bonne ténacité à coeur. Ce traitement est généralement conduit dans une atmosphère gazeuse à une température voisine de 900°C et pendant plusieurs heures ; ceci implique que la cémentation doit impérativement être suivie d'une trempe puis d'un revenu de détente et enfin d'un usinage final car les pièces subissent, à la température de cémentation, des déformations,
* la nitruration est un traitement thermochimique permettant de faire diffuser, sous la surface des aciers, de l'azote. Après nitruration, on peut distinguer, en fonction de la profondeur, deux zones très différentes : en surface, sur une vingtaine de microns, une couche constituée essentiellement de nitrures de fer (phase *ε* ou *γ*') dont la dureté est supérieure à 1000 HV (cette couche est appelée « couche de combinaison » ou encore « couche blanche ») ; sous cette couche se trouve une zone dite « zone de diffusion » dans laquelle l'azote est en insertion dans l'acier (dans certains cas, il peut y avoir une précipitation de nitrures) ; le profil de pénétration d'azote dans cette zone dépend de la nature des éléments d'addition de l'acier et des conditions de nitruration ; dans cette zone l'acier subit des contraintes de compression. Les traitements peuvent être conduits, soit en atmosphère gazeuse, soit en bain de sels fondus. La température est généralement de 570°C, de sorte que, contrairement à la cémentation, la nitruration ne nécessite, ni traitement thermique, ni reprise d'usinage ultérieure. La nitruration est en pratique effectuée dans des applications où on recherche une grande résistance à l'usure combinée à une grande résistance à la fatigue (grâce aux contraintes de compression précitées).

### PROBLEME VISE PAR L'INVENTION

Il est en fait apparu que les performances d'un acier destiné à être soumis à des conditions sévères d'usure, au moins au sein d'un couple d'organes de guidage, ne peuvent être clairement attribuées à la seule couche dure qu'on peut avoir générée par cémentation ou par nitruration, et que d'autres paramètres sont à prendre en considération, notamment la composition ; c'est ainsi qu'on ne peut garantir à l'avance qu'un traitement de nitruration suffira à conférer à une nuance d'acier de bonnes performances tribologiques. De même on ne peut actuellement prévoir les performances tribologiques d'un acier à partir de sa composition sans l'avoir soumis à des tests. On ne peut donc pas actuellement extrapoler les performances d'un nouvel alliage à partir de celles d'alliages similaires.

L'invention a pour objet un couple d'organes de guidage, notamment un système arbre-palier, dont l'un des organes est réalisé en un acier dont la composition particulière permet une très bonne résistance à l'usure après nitruration.

### DESCRIPTION DE L'INVENTION

La Demanderesse a découvert, de façon tout à fait fortuite et inattendue, qu'en réalisant des organes de guidage (des systèmes arbre/palier en particulier) dans certains aciers répondant à des teneurs bien précises en éléments d'addition et en les nitrurant, il était possible d'obtenir des performances tout à fait exceptionnelles, notamment en durée de vie et endurance. Le caractère surprenant de cette découverte tient non seulement au niveau des performances obtenues, mais aussi au fait que celles-ci sont obtenues sans que les propriétés par lesquelles on a l'habitude de caractériser la couche de dureté obtenue par nitruration sur ces aciers particuliers surpassent celles obtenues avec des aciers de compositions voisines ; or il n'y a pas d'explication connue à ce jour à ce phénomène.

En effet, il est d'usage de caractériser l'efficacité de la nitruration par l'évolution de la microdureté de l'acier en fonction de la profondeur de mesure à partir de la surface. On trace alors des courbes « dureté/distance à la surface » appelées généralement « filiations ». L'état de l'art établit généralement une bonne corrélation entre ces filiations et la résistance à l'usure d'organes de guidage. Or, dans le cas présent, les filiations obtenues sont en tous points comparables à celles réalisées sur d'autres aciers nitrurés de compositions a priori équivalentes mais qui, cependant, ne conduisent pas aux très bonnes performances observées.

On connaissait déjà, d'après le document WO - A - 2006/111661, un acier de nitruration de type Cr-Mo-Al (avec éventuellement du vanadium) mais les exemples décrits ne dépassaient pas 1.38% en chrome (un exemple de l'état de la technique mentionné concerne un acier Cr-Mo-V avec une teneur de 0.32% C). On connaissait également, d'après le document DE - 10 012 619 un acier à 0.37% et, d'après le document EP - 1 471 159, des aciers à pas plus de 0.03% de molybdène.

En outre, le document WO 00/18975 décrit un acier de nitruration.

On connaissait par ailleurs, d'après les documents WO - A - 02/25068 ou US - 2003/0190105, des aciers (de composition non précisée) comportant une couche de combinaison de 5 à 15 microns (devant, dans le premier document, être poli pour en enlever une partie superficielle).

De façon plus précise, l'invention concerne un couple d'organes de guidage, notamment un palier ou un arbre d'un système arbre-palier, dont au moins l'un de ses organes est réalisé en un acier dont la composition est :
- carbone compris entre 0.15 et 0.3 % en poids
- chrome compris entre 2 et 3 % en poids
- molybdène au moins 0.45 % en poids et au plus 0.9% en poids
- vanadium supérieur à 0.01 % en poids et au plus égal à 0.3% optionnellement entre 0.4% en poids et 1.5% en poids de manganèse, pas plus de 0.48% de nickel et pas plus de 0.01% d'aluminium, et qui est nitruré après mise en forme en sorte d'obtenir une couche de combinaison entre les atomes de fer et d'azote d'épaisseur comprise entre 5 microns et 50 microns.

L'invention propose ainsi de conserver une couche de combinaison (ou couche blanche), contrairement à ce que l'on cherche à faire dans les applications sous forte charge. En effet, c'est notamment à cette couche blanche qu'il semble qu'on puisse attribuer la haute résistance au grippage d'un organe de guidage conforme à l'invention.

D'autres aspects avantageux de l'invention sont définis dans les revendications dépendantes.

En outre, l'invention concerne l'utilisation, pour la réalisation d'au moins un organe d'un couple d'organes de guidage, d'un acier contenant du carbone entre 0.15 et 0.3 % en poids, du chrome entre 2 et 3 % en poids, au moins 0.45 % en poids et au plus 0.9% en poids de molybdène, et du vanadium à raison de plus de 0.01 % en poids et au plus 0.3 %, optionnellement entre 0.4% en poids et 1.5% en poids de manganèse, pas plus de 0.48% de nickel et pas plus de 0.01% d'aluminium, cet acier, nitruré après mise en forme, comportant une couche de combinaison entre des atomes de fer et d'azote d'épaisseur comprise entre 5 microns et 50 microns.

En outre, l'invention concerne l'utilisation, pour une action de guidage, d'un couple d'organes dont au moins un des organes est réalisé en un acier contenant du carbone entre 0.15 et 0.3 % en poids, du chrome entre 2 et 3 % en poids, au moins 0.45 % en poids et au plus 0.9% en poids de molybdène, et du vanadium à raison de plus de 0.01 % en poids et au plus 0.3 %, optionnellement entre 0.4% en poids et 1.5% en poids de manganèse, pas plus de 0.48% de nickel et pas plus de 0.01% d'aluminium, cet acier, nitruré après mise en forme, comportant une couche de combinaison entre des atomes de fer et d'azote d'épaisseur comprise entre 5 microns et 50 microns.

Les autres éléments d'addition sont apparus indifférents, ne semblant pas jouer de rôle majeur dans l'obtention des performances même si l'aluminium semble nocif au delà de 1 %, et qu'il semble souhaitable de l'éviter (pas plus de 0,1 %, voire 0,01 %,) ; de même le nickel semble aussi avoir un effet nocif et semble pouvoir être omis (pas plus de 0,1 %, voire 0,01 %, par exemple) ; le soufre, le phosphore et le calcium semblent pouvoir aussi être omis (pas plus de 0,1 %, voire 0,01 %, par exemple).

C'est pourquoi, de manière avantageuse, l'acier dont est fait l'organe de guidage ne comporte pas d'élément d'addition en dehors de ceux précités.

Selon une application particulièrement avantageuse de l'invention, on utilise ces aciers nitrurés soit sur l'arbre soit sur le palier d'un système arbre-palier, en fonction des conditions particulières d'utilisation ; l'autre élément du système arbre-palier pouvant être lui aussi un acier de la composition préconisée, ou tout autre matériau compatible, par exemple des matériaux tels que ceux mentionnés dans le document EP - 0 987 456 précité.

Toutefois, l'invention s'applique à bien d'autres couples d'organes de guidage, tels que des glissières, ou des rotules, ou un système de vilebrequin ou un système à arbre à cames, notamment.

Pour être conformes à l'invention, les organes de guidage en acier défini ci-dessus doivent être nitrurés, mais le procédé de nitruration n'est pas apparu avoir dans ce cas une influence majeure ; cette opération peut donc être conduite indifféremment en bain de sels fondus, en phase gazeuse, ou encore par un procédé ionique. De même, la présence d'une couche d'oxyde superficielle recouvrant la couche de nitrure est apparue être sans incidence notable sur les performances. Il en est de même pour la présence de vernis de glissement ou tout autre revêtement de surface, par exemple du type polymère, déposé après nitruration (voir notamment le document EP - 0 987 456 précité).

C'est ainsi que, selon des caractéristiques avantageuses de l'invention, éventuellement combinées :
- ledit organe comporte des cavités non débouchantes,
- ledit organe porte un revêtement en matériau polymère ou copolymère, avantageusement choisi parmi les polyimides, les polyimides chargés, les résines époxy, les résines époxy chargées, les résines polyacétates, le polyéthylène, les fluorocarbones substitués ou non, le polyéthylène téréphtalate, le polyéthersulfone les polyamides et le polyéther-éthercétone,
- cet organe est un palier coopérant avec un arbre,
- en variante, cet organe est un arbre coopérant avec un palier,
- cet organe fait partie d'un couple dans lequel l'arbre est un arbre de vilebrequin, ou en variante, un arbre à cames,
- ces organes forment un système patin-glissière, au sein duquel, à titre d'exemple, l'organe réalisé en ledit acier est la glissière,
- ces organes forment un système à rotule, au sein duquel, à titre d'exemple, l'organe réalisé en ledit acier est une rotule,
- chacun des organes est réalisé en un acier ayant ladite composition.

### EXEMPLES NON LIMITATIFS DE REALISATION CONFORMES ET NON CONFORMES A L'INVENTION

Les exemples non limitatifs qui suivent illustrent des réalisations conformes à l'état de l'art, d'autres réalisations conformes à l'invention, et enfin des réalisations non conformes à l'invention. Ils mettent en évidence la relation entre la composition de l'acier préconisée selon l'invention et les performances tribologiques d'une part, et l'étonnante absence de relation claire entre les duretés de la couche de nitruration (telle qu'elles sont habituellement définies) et ces mêmes performances tribologiques.

Dans chacun de ces exemples, la procédure de test a été choisie pour être parfaitement représentative de la durée de vie d'un système arbre/palier lubrifié à la graisse (classique) et fonctionnant dans des conditions sévères. La procédure est la même pour tous les exemples de façon à permettre une comparaison des résultats. Afin de pouvoir comparer l'influence de la nature de l'acier, tous les échantillons ont été nitrurés de la même manière par immersion 90 minutes dans un bain de sel fondu. Cette technique a été retenue, préférentiellement aux autres qui s'opèrent en milieu gazeux, car un bain de sel est un milieu parfaitement isotherme, ce qui garantit que le traitement est rigoureusement le même pour tous les échantillons et permet de s'affranchir des incertitudes portant sur l'homogénéité thermique des fours de nitruration gazeuse ; mais il est bien évident que l'utilisation de tout autre procédé conduisant à la même couche superficielle reste dans la portée de l'invention.

La littérature portant sur la comparaison des différents procédés de nitruration, sur différentes nuances d'acier, est par ailleurs très abondante et montre que les différences métallurgiques observées sont faibles et sans influence notable sur les performances tribologiques.

Conformément à l'usage, la comparaison de différents aciers nitrurés associe deux types de caractérisation :
- une caractérisation métallurgique consistant à mesurer l'épaisseur de la microcouche de combinaison et sa dureté et à tracer un profil de dureté en fonction de la profondeur de mesure.
- une caractérisation tribologique en faisant frotter une bague en acier cémenté trempé, simulant l'arbre, contre une plaquette en acier nitruré, simulant le palier. La charge appliquée entre la bague et la plaquette est de 250 daN ce qui correspond à une pression de Hertz de 570 MPa, la vitesse de glissement est de 0.18 m/s, le contact est lubrifié à la graisse (avec une graisse classique, telle qu'une graisse à base de savon lithium avec huile minérale paraffinique grade 2 (NLGI), viscosité: 105 centistokes). Le coefficient de frottement est enregistré en fonction du temps et l'essai est caractérisé par le temps au bout duquel apparaît le grippage. A la fin de l'essai, une micrographie est éventuellement réalisée pour visualiser le profil d'usure.

Pour être plus précis, le matériau constitutif de la bague en acier cémenté trempé a été choisi comme étant un acier 16NC6 cémenté trempé, durci entre 58 et 62 HRC et le traitement de nitruration de la plaquette simulant la bague, appliqué aux divers exemples définis ci-dessous :
- immersion dans un bain de sels fondus, de composition commerciale (connue sous la marque « SURSULF ®»),
- température de traitement : 570°C,
- temps de traitement : 90 minutes,
- rinçage à l'eau puis séchage.

### Exemple 1 : conforme à l'état de l'art, non conforme à l'invention (42 CrMo 4)

Conformément à l'état de l'art, la plaquette simulant le palier est en acier contenant 0.42 % de carbone, 1 % de chrome, 0.2 % de molybdène, 0.01 % de vanadium et 0.83 % de manganèse, et a été nitrurée selon la procédure décrite plus haut.

La microdureté de la couche de combinaison est de 1 000 ± 70 kg/mm² (HV) et son épaisseur est de 20 ± 5 micromètres. Cette dureté n'est plus que de 600 ± 50 kg/mm² à 50 micromètres sur la surface et décroît rapidement pour atteindre 420 ± 50 kg/mm² à 200 micromètres de profondeur, ce qui est sensiblement la dureté à coeur.

Le test de frottement conduit au grippage après 25 mn d'essai ; l'expertise métallurgique des pièces après essai montre que la microcouche de combinaison est usée par endroits, des grippages apparaissant immédiatement aux endroits où la microcouche est absente.

### Exemple 2 : non conforme à l'invention (40 CrAIMo 6-12)

La plaquette simulant l'organe de guidage est réalisée en acier contenant 0.44 % de carbone, 1.6 % de chrome, 0.32 % de molybdène, 0.12 % de nickel et 1 % d'aluminium. Cet acier est nitruré selon la procédure décrite plus haut.

L'analyse métallographique montre la présence d'une microcouche de combinaison de dureté 1 300 ± 100 kg/mm² et d'épaisseur 20 ± 5 micromètres. La dureté est encore de 820 ± 50 kg/mm² à une profondeur de 50 micromètres pour se stabiliser à 330 ± 20 kg/mm² à 200 micromètres de profondeur ce qui correspond à la dureté à coeur. Le profil de dureté correspond à l'effet attendu puisque cet acier a été conçu pour cela.

Mise en frottement dans les conditions indiquées, l'éprouvette présente une première amorce de grippage après 10 minutes d'essai, le grippage généralisé apparaissant après 60 minutes d'essai.

L'examen micrographique de la pièce après frottement montre que la microcouche est usée par endroits ; ces zones où l'acier est à nu sont alors très sensibles au grippage.

Cette légère amélioration des performances par rapport au cas présenté dans l'exemple 1 est prévisible et peut être attribuée à la dureté plus élevée des couches superficielles.

### Exemple 3 : conforme à l'invention (32 CrMoV 13)

La plaquette simulant l'organe de guidage est en acier comportant 0.27 % de carbone, 2.9 % de chrome, 0.88 % de molybdène, 0.26 % de vanadium et 0.12 % de nickel ; elle est nitrurée suivant la procédure décrite ci-dessus.

L'examen métallographique de cette plaquette montre la présence d'une microcouche de combinaison dont l'épaisseur est de 20 ± 5 micromètres et la dureté de 1 150 ± 100 kg/ mm². A 50 micromètres de profondeur, la dureté est de 770 ± 50 kg/mm², elle se stabilise à 350 ± 20 kg/mm² à 200 micromètres de profondeur, ce qui correspond sensiblement à la dureté à coeur.

L'essai de frottement fait apparaître des traces de grippage après 140 minutes d'essai, l'examen de la zone frottante montre que la microcouche de combinaison n'est pas usée totalement, l'épaisseur résiduelle étant comprise entre 5 et 8 micromètres. Son aspect est brillant, elle est exempte de traces de grippage ; par contre les microgrippages observés à l'origine de l'arrêt de l'essai se sont produits sur la pièce antagoniste.

Cette amélioration des performances ne peut en aucun cas être reliée à l'épaisseur initiale de la microcouche, à sa dureté ou encore à l'évolution de la dureté en fonction de la profondeur puisque, à la précision des mesures près, ces grandeurs sont tout à fait comparables à celles relevées dans l'exemple 2 qui conduit à des résultats beaucoup moins bons.

### Exemple 4 : conforme à l'invention (15 CrMnMoV 9)

La plaquette simulant l'organe de guidage est constituée d'un acier contenant 0.15 % de carbone, 1.25 % de manganèse, 2.14 % de chrome, 0.47 % de molybdène, 0.48 % de nickel et 0.17 % de vanadium ; elle est nitrurée suivant la procédure décrite plus haut.

Son examen métallographique fait apparaître en surface une microcouche de combinaison dont l'épaisseur est de 20 ± 4 micromètres et la dureté de 1 100 ± 100 kg/mm². A 50 micromètres de profondeur, la dureté est de 780 ± 50 kg/mm², elle se stabilise à partir de 200 micromètres de profondeur à la valeur de 350 ± 20 kg/mm².

Le test de frottement laisse apparaître les premières traces de grippage après 150 mn d'essai ; après démontage, l'examen de la plaquette montre que la microcouche de combinaison est totalement usée, mais la plaquette présente un aspect lisse uniforme, les microgrippages s'étant manifestés uniquement sur la pièce antagoniste.

### Exemple 5 : conforme à l'invention (18 CrMo 7)

La plaquette simulant l'organe de guidage est réalisée en acier contenant 0.18 % de carbone, 2 % de chrome, 0.5 % de molybdène, 0.15 % de nickel, 0.7 % de manganèse et 0.01 de vanadium. Elle est nitrurée suivant la procédure décrite plus haut.

L'analyse métallographique montre la présence d'une microcouche de combinaison de dureté 1 150 ± 100 kg/mm² et d'épaisseur 13 ± 5 micromètres, la dureté est encore de 770 ± 50 kg/mm² à une profondeur de 50 micromètres sous la couche de combinaison et se stabilise à 300 ± 50 kg/mm² à coeur.

Mise en frottement dans les conditions indiquées, l'éprouvette présente une première amorce de grippage après 225 minutes d'essai ce qui est tout à fait remarquable.

### Exemples 6 à 8 : non conformes à l'invention

| **Compositions** | | | | | |
|---|---|---|---|---|---|
| Désignation des aciers suivant norme | % C | % Cr | % Mo | % V | % Mn |
| 15 CrMoV6 | 0.15 | 1.25 | 0.8 | 0.2 | 0.8 |
| 30 CrMo 12 | 0.3 | 3 | 0.4 | 0 | |
| 40 CrMnMo 8 | 0.38 | 2 | 0.2 | 0.1 | |

| **Caractéristiques superficielles** a **après nitruration** | | | | |
|---|---|---|---|---|
| Désignation suivant norme | Epaisseur couche de combinaison (µm) | Dureté couche de Combinaison (kg/mm²) | Dureté à 50 µm sous la couche (kg/mm²) | Dureté à coeur (kg/mm²) |
| 15 CrMoV6 | 15 ± 5 | 1180 ± 100 | 770 ± 50 | 400 ± 50 |
| 30 CrMo 12 | 20 ± 5 | 1120 ± 100 | 720 ± 50 | 360 ± 50 |
| 40 CrMnMo 8 | 13 ± 5 | 1050 ± 100 | 700 ± 50 | 320 ± 50 |

| **Performances en frottement** | |
|---|---|
| Désignation suivant norme | Durée de vie avant grippage (min) |
| 15 CrMoV6 | 15 |
| 30 CrMo 12 | 21 |
| 40 CrMnMo 8 | 26 |

Ces exemples non limitatifs illustrent le caractère tout à fait surprenant des résultats obtenus avec les pièces réalisées avec les aciers nitrurés conformes à l'invention ; alors que la dureté superficielle semble ne pas intervenir dans le phénomène (les duretés des deux premiers aciers non conformes 1 et 2 encadrent celles des trois aciers conformes 3 à 5, tant en surface qu'en profondeur) ; on constate que lorsque l'organe de guidage est réalisé en acier de construction ordinaire ou « de nitruration » mais dont la composition est en dehors de la fourchette revendiquée, la résistance à l'usure de la microcouche de combinaison est médiocre, et sa disparition locale sous l'effet de l'usure conduit immédiatement au grippage, alors que lorsque l'organe de guidage est en acier conforme à l'invention, non seulement la microcouche de combinaison, à dureté égale, s'use beaucoup moins vite, mais la zone de diffusion sous jacente présente elle-même des propriétés tribologiques étonnantes puisqu'elle ne grippe pas, ce phénomène finissant par arriver in extremis sur la pièce antagoniste. La durée de vie de la pièce constitutive de l'organe de guidage est ainsi allongée d'un facteur allant de 2.5 à plus de 5 suivant les cas, ce qui est un avantage tout à fait considérable.

On peut noter que dans les exemples précités, il y a eu une augmentation sensible des propriétés anti-grippantes par rapport aux solutions connues, sans augmenter la dureté de la couche blanche et sans augmenter de manière significative la profondeur du durcissement (qui est typiquement inférieure à 500 microns, contrairement à ce que recherche par exemple un document tel que WO-00/18 975).

L'explication de ce phénomène n'est pas encore connue.

Comme indiqué ci-dessus, l'invention s'applique tout particulièrement bien à un système arbre-palier dont le palier est réalisé en un acier conforme à la définition donnée ci-dessus, en combinaison avec un arbre qui peut être en tout matériau compatible, notamment un acier tel qu'un acier durci par un moyen quelconque et dont la dureté est supérieure à 55 HCR. Il peut s'agir notamment d'un acier choisi parmi les aciers cémentés, trempés, rectifiés, les aciers trempés HF rectifiés, les aciers durcis puis revêtus de chrome dur, les aciers nitrurés, les aciers revêtus de céramique et les autres aciers carbonitrurés.

En variante c'est l'arbre d'un tel système arbre-palier qui peut être réalisé en un acier conforme à la définition précitée, avec un palier en l'un des matériaux indiqués au paragraphe précédent. Dans le cas particulier de systèmes à vilebrequin ou à arbre à cames, l'acier préconisé ci-dessus est avantageusement utilisé pour le maneton ou le tourillon du vilebrequin ou de l'arbre à cames.

L'invention s'applique à bien d'autres couples d'organes de guidage, tels que ceux décrits dans le document EP - 0 987 456 précité ; c'est ainsi que l'acier préconisé ci-dessus peut être utilisé pour réaliser, notamment, la glissière ou le patin d'un couple glissière-patin, ou la rotule ou la coiffe d'un système à rotule.

Les deux organes de guidage d'un même couple peuvent même être réalisés en un acier rentrant dans la définition précitée, par exemple en des aciers de mêmes compositions.

De même, l'une des surfaces comporte avantageusement des cavités non débouchantes et/ou est revêtu (il peut s'agir de la pièce réalisée dans l'acier préconisé) d'un matériau polymère ou copolymère, notamment choisi parmi les polyimides, les polyimides chargés, les résines époxy, les résines époxy chargées, les résines polyacétates, le polyéthylène, les fluorocarbones substitués ou non, le polyéthylène téréphtalate, le polyéthersulfone, les polyamides et le polyéther-éthercétone.

## Revendications

1. Couple d'organes de guidage **caractérisé en ce qu'**au moins l'un de ses organes est réalisé en un acier contenant du carbone entre 0.15 et 0.3 % en poids, du chrome entre 2 et 3 % en poids, au moins 0.45 % en poids et au plus 0.9% en poids de molybdène, et du vanadium à raison de plus de 0.01 % en poids et au plus 0.3 %, optionnellement entre 0.4% en poids et 1.5% en poids de manganèse, pas plus de 0.48% de nickel et pas plus de 0.01% d'aluminium, et que cet acier, nitruré après mise en forme, comporte une couche de combinaison entre des atomes de fer et d'azote d'épaisseur comprise entre 5 microns et 50 microns.

2. Couple selon la revendication 1, **caractérisé en ce que** la teneur en chrome est comprise entre 2% et 2.9% en poids.

3. Couple selon l'une quelconque des revendications 1 ou 2, **caractérisé en ce que** la teneur en carbone est comprise entre 0.15 et 0.27 % en poids.

4. Couple selon l'une quelconque des revendications 1 à 3, dont l'acier contient du carbone entre 0.15 et 0.18% en poids, du chrome entre 2 et 2.14% en poids, du molybdène entre 0.47 et 0.5% en poids, du vanadium entre 0.01 et 0.17% en poids, du nickel entre 0.15 et 0.48% en poids, du manganèse entre 0.7 et 1.25% en poids et pas plus de 0.01% en poids d'aluminium.

5. Couple selon l'une quelconque des revendications 1 à 3, dont l'acier contient 0.27% C, 2.9% Cr, 0.88% Mo, 0.26% V, 0.12% Ni, et pas plus de 0.01% en poids d'aluminium.

6. Couple selon l'une quelconque des revendications 1 à 5, **caractérisé en ce que** ledit organe comporte des cavités non débouchantes.

7. Couple selon l'une quelconque des revendications 1 à 6, **caractérisé en ce que** ledit organe porte un revêtement en matériau polymère ou copolymère.

8. Couple selon la revendication 7, **caractérisé en ce que** le revêtement est en un matériau choisi parmi les polyimides, les polyimides chargés, les résines époxy, les résines époxy chargées, les résines polyacétates, le polyéthylène, les fluorocarbones substitués ou non, le polyéthylène téréphtalate, le polyéthersulfone, les polyamides et le polyéther-éthercétone

9. Couple selon l'une quelconque des revendications 1 à 8, **caractérisé en ce que** cet organe est un palier coopérant avec un arbre.

10. Couple selon l'une quelconque des revendications 1 à 8, **caractérisé en ce que** cet organe est un arbre coopérant avec un palier.

11. Couple selon la revendication 9 ou la revendication 10, **caractérisé en ce que** l'arbre est un arbre de vilebrequin.

12. Couple selon la revendication 9 ou la revendication 10, **caractérisé en ce que** l'arbre est un arbre à cames.

13. Couple selon l'une quelconque des revendications 1 à 8, **caractérisé en ce que** ces organes forment un système patin-glissière.

14. Couple selon la revendication 13, **caractérisé en ce que** l'organe réalisé en ledit acier est la glissière.

15. Couple selon l'une quelconque des revendications 1 à 8, **caractérisé en ce que** ces organes forment un système à rotule.

16. Couple selon la revendication 15, **caractérisé en ce que** l'organe réalisé en ledit acier est une rotule.

17. Couple selon l'une quelconque des revendications 1 à 16, **caractérisé en ce que** chacun des organes est réalisé en un acier ayant ladite composition et une couche de combinaison d'épaisseur comprise entre 5 et 50 microns.

18. Couple selon l'une quelconque des revendications 1 à 16, **caractérisé en ce que** l'autre organe de guidage est en acier.

19. Couple selon l'une quelconque des revendications 1 à 18, **caractérisé en ce que** ledit organe de guidage ne contient pas plus de 0,1 % de nickel.

20. Utilisation, pour la réalisation d'au moins un organe d'un couple d'organes de guidage, d'un acier contenant du carbone entre 0.15 et 0.3 % en poids, du chrome entre 2 et 3 % en poids, au moins 0.45 % en poids et au plus 0.9% en poids de molybdène, et du vanadium à raison de plus de 0.01 % en poids et au plus 0.3 %, optionnellement entre 0.4% en poids et 1.5% en poids de manganèse, pas plus de 0.48% de nickel et pas plus de 0.01% d'aluminium, cet acier, nitruré après mise en forme, comportant une couche de combinaison entre des atomes de fer et d'azote d'épaisseur comprise entre 5 microns et 50 microns.

21. Utilisation, pour une action de guidage, d'un couple d'organes dont au moins un des organes est réalisé en un acier contenant du carbone entre 0.15 et 0.3 % en poids, du chrome entre 2 et 3 % en poids, au moins 0.45 % en poids et au plus 0.9% en poids de molybdène, et du vanadium à raison de plus de 0.01 % en poids et au plus 0.3 %, optionnellement entre 0.4% en poids et 1.5% en poids de manganèse, pas plus de 0.48% de nickel et pas plus de 0.01% d'aluminium, cet acier, nitruré après mise en forme, comportant une couche de combinaison entre des atomes de fer et d'azote d'épaisseur comprise entre 5 microns et 50 microns.

## Patentansprüche

1. Führungselementpaar, **dadurch gekennzeichnet, dass** mindestens eines der Führungselemente aus einem Stahl gebildet ist, der zwischen 0,15 und 0,3 Gewichts-% Kohlenstoff, zwischen 2 und 3 Gewichts-% Chrom, mindestens 0,45 Gewichts-% und höchstens 0,9 Gewichts-% Molybdän und Vanadium im Umfang von mehr als 0,01 Gewichts-% und höchstens 0,3 %, optional zwischen 0,4 Gewichts-% und 1,5 Gewichts-% Mangan, nicht mehr als 0,48 % Nickel und nicht mehr als 0,01 % Aluminium enthält, wobei der Stahl nach der Formgebung nitriert wurde und eine Verbindungsschicht mit Eisen- und Stickstoffatomen umfasst, deren Dicke zwischen 5 Mikron und 50 Mikron liegt.

2. Führungselementpaar nach Anspruch 1, **dadurch gekennzeichnet, dass** der Chromgehalt zwischen 2% und 2,9 Gewichts-% liegt.

3. Führungselementpaar nach einem der Ansprüche 1 oder 2, **dadurch gekennzeichnet, dass** der Kohlenstoffgehalt zwischen 0,15 und 0,27 Gewichts-% liegt.

4. Führungselementpaar nach einem der Ansprüche 1 bis 3, wobei der Stahl zwischen 0,15 und 0,18 Gewichts-% Kohlenstoff, zwischen 2 und 2,14 Gewichts-% Chrom, zwischen 0,47 und 0,5 Gewichts-% Molybdän, zwischen 0,01 und 0,17 Gewichts-% Vanadium, zwischen 0,15 und 0,48 Gewichts-% Nickel, zwischen 0,7 und 1,25 Gewichts-% Mangan und nicht mehr als 0,01 Gewichts-% Aluminium enthält.

5. Führungselementpaar nach einem der Ansprüche 1 bis 3, wobei der Stahl 0,27 Gewichts-% C, 2,9 Gewichts-% Cr, 0,88 Gewichts-% Mo, 0,26 Gewichts-% V, 0,12 Gewichts-% Ni und nicht mehr als 0,01 Gewichts-% Aluminium enthält.

6. Führungselementpaar nach einem der Ansprüche 1 bis 5, **dadurch gekennzeichnet, dass** das Führungselement Aussparungen aufweist, die nicht durchgehend sind.

7. Führungselementpaar nach einem der Ansprüche 1 bis 6, **dadurch gekennzeichnet, dass** das Führungselement eine Beschichtung aus einem Polymer- oder Copolymermaterial trägt.

8. Führungselementpaar nach Anspruch 7, **dadurch gekennzeichnet, dass** die Beschichtung ein Material ist, das ausgewählt ist aus Polyimiden, geladenen Polyimiden, Epoxidharzen, geladenen Epoxidharzen, Polyacetatharzen, Polyethylen, substituierten oder unsubstituierten Fluorkohlenstoffen, Polyethylenterephthalat, Polyethersulfon, Polyamiden und Polyetheretherketon.

9. Führungselementpaar nach einem der Ansprüche 1 bis 8, **dadurch gekennzeichnet, dass** das Führungselement ein Lager ist, das mit einer Welle zusammenwirkt.

10. Führungselementpaar nach einem der Ansprüche 1 bis 8, **dadurch gekennzeichnet, dass** das Führungselement eine Welle ist, die mit einem Lager zusammenwirkt.

11. Führungselementpaar nach Anspruch 9 oder Anspruch 10, **dadurch gekennzeichnet, dass** die Welle eine Kurbelwelle ist.

12. Führungselementpaar nach Anspruch 9 oder Anspruch 10, **dadurch gekennzeichnet, dass** die Welle eine Nockenwelle ist.

13. Führungselementpaar nach einem der Ansprüche 1 bis 8, **dadurch gekennzeichnet, dass** die Führungselemente ein Schlitten-Gleitschienen-System bilden.

14. Führungselementpaar nach Anspruch 13, **dadurch gekennzeichnet, dass** das aus dem Stahl gebildete Führungselement die Gleitschiene ist.

15. Führungselementpaar nach einem der Ansprüche 1 bis 8, **dadurch gekennzeichnet, dass** die Führungselemente ein Kugelgelenksystem bilden.

16. Führungselementpaar nach Anspruch 15, **dadurch gekennzeichnet, dass** das aus dem Stahl gebildete Führungselement ein Kugelgelenk ist.

17. Führungselementpaar nach einem der Ansprüche 1 bis 16, **dadurch gekennzeichnet, dass** jedes der Führungselemente aus einem Stahl gebildet ist, der die genannte Zusammensetzung und eine Verbindungsschicht mit einer zwischen 5 und 50 Mikron liegenden Dicke aufweist.

18. Führungselementpaar nach einem der Ansprüche 1 bis 16, **dadurch gekennzeichnet, dass** das andere Führungselement aus Stahl ist.

19. Führungselementpaar nach einem der Ansprüche 1 bis 18, **dadurch gekennzeichnet, dass** das Führungselement nicht mehr als 0,1 Gewichts-% Nickel enthält.

20. Verwendung eines Stahls zur Herstellung mindestens eines Führungselements in einem Führungselementpaar, wobei der Stahl zwischen 0,15 und 0,3 Gewichts-% Kohlenstoff, zwischen 2 und 3 Gewichts-% Chrom, mindestens 0,45 Gewichts-% und höchstens 0,9 Gewichts-% Molybdän, und Vanadium im Umfang von mehr als 0,01 Gewichts-% und höchstens 0,3 Gewichts-%, optional zwischen 0,4 Gewichts-% und 1,5 Gewichts-% Mangan, nicht mehr als 0,48 % Nickel und nicht mehr als 0,01 % Aluminium enthält, wobei der Stahl nach der Formgebung nitriert wurde und eine Verbindungsschicht mit Eisen- und Stickstoffatomen umfasst, deren Dicke zwischen 5 Mikron und 50 Mikron liegt.

21. Verwendung eines Paares von Elementen zum Erzielen einer führenden Wirkung, wobei mindestens eines der Elemente aus einem Stahl gebildet ist, der zwischen 0,15 und 0,3 Gewichts-% Kohlenstoff, zwischen 2 und 3 Gewichts-% Chrom, mindestens 0,45 Gewichts-% und höchstens 0,9 Gewichts-% Molybdän, und Vanadium im Umfang von mehr als 0,01 Gewichts-% und höchstens 0,3 Gewichts-%, optional zwischen 0,4 Gewichts-% und 1,5 Gewichts-% Mangan, nicht mehr als 0,48 % Nickel und nicht mehr als 0,01 % Aluminium enthält, wobei der Stahl nach der Formgebung nitriert wurde und eine Verbindungsschicht mit Eisen- und Stickstoffatomen umfasst, deren Dicke zwischen 5 Mikron und 50 Mikron liegt.

## Claims

1. A pair of guide members **characterized in that** at least one of its members is made of steel containing carbon between 0.15 and 0.3% by weight, chromium between 2 and 3% by weight, at least 0.45 % by weight and not more than 0.9% by weight of molybdenum, and vanadium in an amount more than 0.01% by weight and not more than 0.3%, optionally between 0.4% by weight and 1.5% by weight of manganese, not more than 0.48% of nickel and not more than 0.01% of aluminum, and **in that** said steel, nitrided after putting into shape, comprises a layer of combination between iron and nitrogen atoms of thickness between 5 microns and 50 microns.

2. A pair according to claim 1, **characterized in that** the chromium content is between 2% and 2.9% by weight.

3. A pair according to any one of claims 1 or 2, **characterized in that** the carbon content is between 0.15 and 0.27% by weight.

4. A pair according to any one of claims 1 to 3, in which the steel contains carbon between 0.15 and 0.18% by weight, chromium between 2 and 2.14% by weight, molybdenum between 0.47 and 0.5% by weight, vanadium between 0.01 and 0.17% by weight, nickel between 0.15 and 0.48% by weight, manganese between 0.7 and 1.25% by weight and not more than 0.01% by weight of aluminum.

5. A pair according to any one of claims 1 to 3, in which the steel contains 0.27% C, 2.9% Cr, 0.88% Mo, 0.26% V, 0.12% Ni, and not more than 0.01% by weight of aluminum.

6. A pair according to any one of claims 1 to 5, **characterized in that** said member comprises blind cavities.

7. A pair according to any one of claims 1 to 6, **characterized in that** said member bears a coating of polymer or copolymer material.

8. A pair according to claim 7, **characterized in that** the coating is made of a material selected from polyimides, filled polyimides, epoxy resins, filled epoxy resins, polyacetate resins, polyethylene, fluorocarbons whether or not substituted, polyethylene terephthalate, polyethersulfone, polyamides and polyetheretherketone.

9. A pair according to any one of claims 1 to 8, **characterized in that** said member is a bearing cooperating with a shaft.

10. A pair according to any one of claims 1 to 8, **characterized in that** said member is a shaft cooperating with a bearing.

11. A pair according to claim 9 or claim 10, **characterized in that** the shaft is a crankshaft.

12. A pair according to claim 9 or claim 10, **characterized in that** the shaft is a camshaft.

13. A pair according to any one of claims 1 to 8, **characterized in that** said members form a slider-slideway system.

14. A pair according to claim 13, **characterized in that** the member made of said steel is the slideway.

15. A pair according to any one of claims 1 to 8, **characterized in that** said members form a ball-joint system.

16. A pair according to claim 15, **characterized in that** the member made of said steel is a ball joint.

17. A pair according to any one of claims 1 to 16, **characterized in that** each of the members is made of steel having said composition and a combination layer of thickness between 5 and 50 microns.

18. A pair according to any one of claims 1 to 16, **characterized in that** the other guide member is made of steel.

19. A pair according to any one of claims 1 to 18, **characterized in that** said guide member contains not more than 0.1% of nickel.

20. Use, for producing at least one member of a pair of guide members, of steel containing carbon between 0.15 and 0.3% by weight, chromium between 2 and 3% by weight, at least 0.45 % by weight and not more than 0.9% by weight of molybdenum, and vanadium in an amount more than 0.01% by weight and not more than 0.3%, optionally between 0.4% by weight and 1.5% by weight of manganese, not more than 0.48% of nickel and not more than 0.01% of aluminum, said steel, nitrided after putting into shape, comprising a layer of combination between iron and nitrogen atoms of thickness between 5 microns and 50 microns.

21. Use for a guiding action, of a pair of members of which at least one of the members is made of steel containing carbon between 0.15 and 0.3% by weight, chromium between 2 and 3% by weight, at least 0.45 % by weight and not more than 0.9% by weight of molybdenum, and vanadium in an amount more than 0.01% by weight and not more than 0.3%, optionally between 0.4% by weight and 1.5% by weight of manganese, not more than 0.48% of nickel and not more than 0.01% of aluminum, said steel, nitrided after putting into shape, comprising a layer of combination between iron and nitrogen atoms of thickness between 5 microns and 50 microns.
